# EUROPEAN PATENT SPECIFICATION

(11) **EP 1 870 211 B1**
(45) Date of publication and mention of the grant of the patent: **27.02.2019**
(21) Application number: 06012901.2
(22) Date of filing: 22.06.2006
(51) Int. Cl.: B25J 9/16

(54) **Method for controlling a robot by assessing the fitness of a plurality of simulated behaviours**
Verfahren zur Steuerung eines Roboters durch Bewertung der Relevanz von mehreren simulierten Verhalten
Méthode pour commander en robot par évaluation de la pertinence de plusieurs comportements simulés

(43) Date of publication of application: 26.12.2007
(73) Proprietor: Honda Research Institute Europe GmbH, 63073 Offenbach/Main (DE)
(72) Inventor: Gienger, Michael, Dr., 60599 Frankfurt am Main (DE)
(74) Representative: Rupp, Christian

(56) References cited:
- WO-A2-03/006215
- US-A1- 5 889 926
- YOON KWON HWANG ET AL: "Self-learning control of cooperative motion for a humanoid robot" ROBOTICS AND AUTOMATION, 2006. ICRA 2006. PROCEEDINGS 2006 IEEE INTERNATIONAL CONFERENCE ON ORLANDO, FL, USA MAY 15-19, 2006, PISCATAWAY, NJ, USA,IEEE, 15 May 2006 (2006-05-15), pages 475-480, XP010921318 ISBN: 0-7803-9505-0
- CEM HOCAOGLU AND ARTHUR C. SANDERSON: "Planning Multiple Paths with Evolutionary Speciation", IEEE TRANSACTIONS ON EVOLUTIONARY COMPUTATION, IEEE SERVICE CENTER, NEW YORK, NY, US, vol. 5, no. 3, 1 June 2001 (2001-06-01), XP011020157, ISSN: 1089-778X
- YANRONG HU ET AL: "A knowledge based genetic algorithm for path planning of a mobile robot", ROBOTICS AND AUTOMATION, 2004. PROCEEDINGS. ICRA '04. 2004 IEEE INTERN ATIONAL CONFERENCE ON NEW ORLEANS, LA, USA APRIL 26-MAY 1, 2004, PISCATAWAY, NJ, USA,IEEE, US, vol. 5, 26 April 2004 (2004-04-26), pages 4350-4355, XP010768079, DOI: 10.1109/ROBOT.2004.1302402 ISBN: 978-0-7803-8232-9
- JING XIAO ET AL: "Adaptive Evolutionary Planner/Navigator for Mobile Robots", IEEE TRANSACTIONS ON EVOLUTIONARY COMPUTATION, IEEE SERVICE CENTER, NEW YORK, NY, US, vol. 1, no. 1, 1 April 1997 (1997-04-01), XP011020204, ISSN: 1089-778X

## Description

### Field of Invention

The present invention relates to a technique for computing and controlling the reactions of a robot in response to a dynamic environment. This technique can e.g. be used to create dynamic interactions with such systems, for example the cooperative handing over of objects, or any other cooperative task that requires dynamic interaction. The invention, however, is not limited to the field of control theory, but can also be applied to other mechanical systems.

US 5 889 926 A1 discloses a method for controlling a robot that iteratively develops a sequence of individual steps towards a given goal, wherein each single step is evaluated as to whether it results in a collision and whether it will bring the robot closer to the goal position.

Cem Hoca 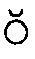 glu et al.: "Planning Multiple Paths with Evolutionary Speciation", IEEE TRANSACTIONS ON EVOLUTIONARY COMPUTATION, New York, US, VOL. 5, NO. 3, 1 JUNE 2001 discloses a system for planning paths for mobile robots that evaluates paths, over which the goal can be achieved, with respect to the path length and the proximity to obstacles.

WO 03/006215 A2 discloses an automated processing system, in which a system controller uses a meta-heuristic technique for identifying an optimal or near-optimal control schedule for controlling movements and operations of a robot.

It is the object of the present invention a method for controlling the behaviour of an intelligent mechanical system, such as e.g. a robot, a controller, a robot and a computer software product, with which the interaction of a mechanical system such as e.g. a robot with its environment can be improved.

This object is achieved by means of the features of the independent claims. The dependent claims develop further the central idea of the present invention.

In the present invention, "Internally simulating" is to be understood as the mechanical system autonomously simulating the different alternatives e.g. by means of an integrated computing unit.

Further features, aspects and objects of the present invention will become evident for the skilled person when reading the following detailed description of an embodiment taken in conjunction with the figures of the enclosed drawings.
Figure 1 shows a diagram for controlling the interactive behavior of a robot.
Figure 2 shows the progression of fitness functions of four simulation instances over time.

### Description

The present invention proposes a intelligent mechanical system, such as e.g. a robot, able to carry out different movement behaviours, which respectively involve of a plurality of degree-of-freedoms.

"Intelligent" means that the system is provided with a computing unit able to process high-level commands and, in response to these commands, control the physical behaviour of the mechanical system, the behaviour in response to a (environment-related) high-level command representing an interactive behaviour.

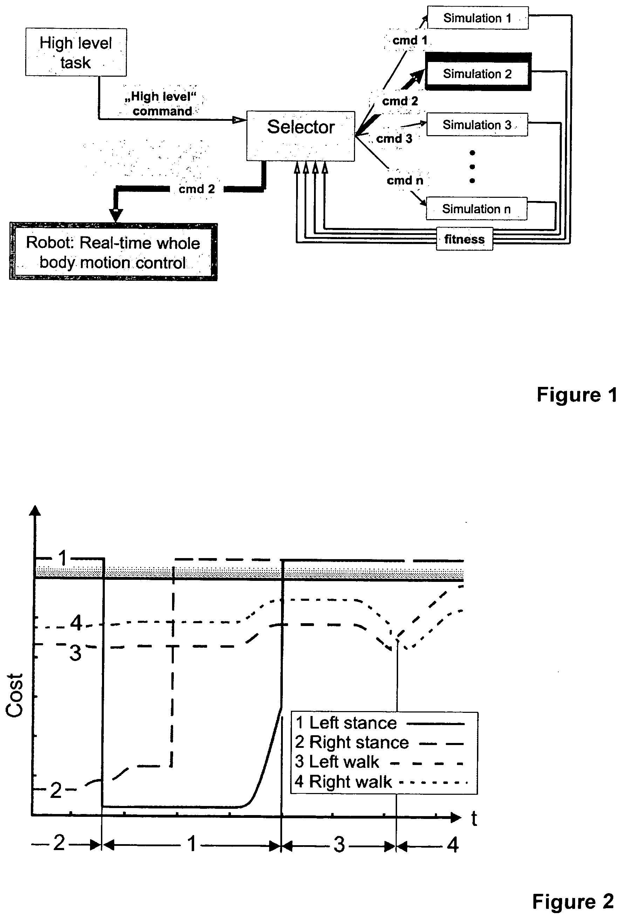

The mechanical system is designed to "switch" behaviors, i.e. select among alternative behaviour options. The selection of the physical behaviour which is actually carried out in practice (and not only in internal simulations) can be made e.g. based on an internal simulation architecture as shown in figure 1. As shown in figure 1, a high level command resulting from a high-level task, such as e.g. a target processed and determined by a vision system of a robot or other (e.g. acoustical) sensing systems, is sent to a selection instance (Selector). The target may have an abstract form and does not necessarily need to correspond to a robot-specific target description.

The high-level task can be generated by the robot itself (e.g. via object recognition) and/or by feeding an external command to the robot.

In a second step, the high level target is processed by the selector. This mechanism generates different commands cmdl, cmd2,... from the abstract target. Each of the individual commands is generated so that the high level target can be achieved. These commands cmdl, cmd2,... correspond to a control input that can be physically controlled by the underlying robot or other mechanical system with a multitude of degrees-of-freedom. There is no upper limit as to the number of generated commands cmdl, cmd2,...

In a third step, each individual command is passed to an internal simulation mechanism of the underlying robot / system. This internal simulation receives the command and simulates via computation the respective movement of the robot / system. In robot control, this can e.g. be done with the method of "Inverse Kinematics" or "Inverse Dynamics".

In a further step, the internal simulation then evaluates the simulated motion in that it computes a value using a cost function, the cost function representing different objectives (optimizing the speed, the resources consumed etc.). This value can also be called "fitness value".

"Cost Function" and "fitness value" are well-recognized terms in the field of optimization.

This cost function value depends on the given interactive scenario. A possible example of how such a cost function can be set up is given in the example below. In a next step, each of the individual internal simulation instances communicates its cost value back to the selection mechanism. The selection mechanism now chooses the most adequate simulation for the specific context, for example by applying a "winner takes all" strategy on the fitness values. Now the command of the chosen simulation instance is sent to the physical robot / system.

The following points shall be emphasized:
- The processing speed of the internal simulation may be higher than the real time. This means that the internal simulation instance can decide whether a strategy is suitable before the physical robot has reached such a state. This can be termed "internal prediction" capability
- The presented method can work in iterative steps. This means that the loop between selector, simulations and real robot / system is updated within very short time intervals (E.g. 1 millisecond). This allows the method to react quickly on changing environments, as the changes will be reflected in the current "high level command". The behaviour of the robot thus can be updated during an ongoing execution of a task.
- The internal simulation contains a full simulation of the robot controller. This can also include methods for self collision detection, self collision avoidance and the avoidance of external objects.
- The simulation can be a kinematic simulation (considering only the motion) or a dynamic simulation (considering also the force interaction of the system).

### Example

A robot shall grasp an object out of the hand of a human. The human holds the object and can move it arbitrarily. The "high level command" would be the coordinates of the object,' for example extracted by a camera system. A selection mechanism now could do the following command separation as shown in figure 2:
- Assign the coordinates of the object to the left hand, stand still (Alternative 1)
- Assign the coordinates of the object to the right hand, stand still (Alternative 2)
- Assign the coordinates of the object to the left hand, walk (Altenative 3)
- Assign the coordinates of the object to the right hand, walk (Alternative 4)

Each simulation now is being evaluated. The selection of the most appropriate strategy is based on the evaluation of a multi-criteria cost function (Also fitness function). To illustrate this, it is assumed a robot that has to grasp an object out of the hand of a human. Therefore "grasping the object" is the high-level command.

In this example, the cost function encodes the following heuristics: Standing will be preferred over walking, walking over doing nothing. For this, the following criteria are incorporated in the fitness function:

### • Reachability of the target

If the target cannot be reached, a high penalty is added to the cost function. This results that this strategy will not be selected.

### • Postural discomfort

The weighted least squares distance of the joints to their center positions defines a "discomfort" penalty. Whenever the target is moved from the one side to the other, this penalty will make the system switch the reaching arm.

### • "Laziness"

Both walking strategies receive a constant penalty, so that standing will be preferred over the walking.

### • Time to target

This penalty is added to the walking strategies. It is a measure for the estimated time to target, so that the target will be reached most efficiently. This penalty makes the robot select the strategy that brings it towards stance with the minimum number of steps.

This example seems simple, but the general concept allows to incorporate more advanced decision mechanisms and to formulate arbitrary complex criteria. The emerging robot behavior is very interesting (see figure 2 showing the progression):
- When moving the object from the left to the right, the robot will first (first period in figure 2) try to reach it with the right hand and then dynamically switches to the left hand (second period).
- If the object gets out of reach, it will start walking and follow the object (third period in figure 2) .
- In the third period of figure 2 the robots walks and tries, at the same time, to reach the object with the left hand.
- In the fourth period of figure 2 the robots walks and tries, at the same time, to reach the object with the right hand.

Figure 2 shows the developments of the cost functions of the four alternatives over time. The cost function with the lowest value is considered to be the best. The periods within which the respective strategy is active, is shown under the time axis.

From figure 2 it is evident that, while attempting to carry out the high-level command, the internal simulation iteratively continues to compute the best behaviour alternative in view of the current status of the execution of the high-level task..

The following point shall be noted: The proposed selection mechanism which employs internal simulations in the above mentioned way can also be applied to other robots or systems.

## Claims

1. A method for controlling the reactions of a robot having a left hand and a right hand, able to carry out different movement behaviours, which respectively are composed of a plurality of degree-of-freedoms, in response to a dynamic environment,
the method comprising the following steps:
- defining, as a task, a grasping a movable target for a behaviour to a selector unit,
- the selector unit generating at least two behaviour commands for each hand respectively adapted to reach the defined target, such that the target is achieved,
- for each alternative command, internally simulating the corresponding resulting movement(s) of the mechanical system by a computing unit which is integral part of the mechanical system,
- assessing the fitness of each of the simulated resulting movements with respect to at least one objective and using a cost function, wherein a wheighted least squares distance of the arms' joints from their center positions define a discomfort penalty is incorporated as one criteria into the fitness function, and
- sending the command resulting in the simulated movement with the highest fitness value to physical actuators of the mechanical system, wherein,
while attempting to reach the defined target, the internal simulation iteratively continues to compute the best behaviour alternative in view of the current status of the execution of the task.

2. The method according to claim 1,
wherein the mechanical system is an autonomous robot.

3. The method according to any of the preceding claims,
wherein the target is generated by a visual system of the mechanical system.

4. The method according to any of the preceding claims,
wherein the simulation is carried out using a Inverse Dynamics or Inverse Kinematics approach.

5. The method according to any of the preceding claims,
wherein the internal simulation processing speed is set higher than the mechanical response time of the underlying mechanical system.

6. The method according to any of the preceding claims,
wherein the processing steps are carried out in an iterative manner.

7. The method according to any of the preceding claims,
wherein the simulation comprises a self collision detection, a self collision avoidance and/or the avoidance of external objects.

8. The method according to any of the preceding claims,
wherein the simulation is a kinematic simulation of the motion or a dynamic simulation considering the motion and the force interaction of the system.

9. A controller designed to implement a method according to any of the preceding claims.

10. A robot having a controller according to claim 9.

11. A computer software product,
implementing a method according to any of the preceding claims when run on a computing device.

## Patentansprüche

1. Verfahren zum Steuern von Reaktionen eines Roboters, der eine linke Hand und eine rechte Hand hat, die in der Lage sind, unterschiedliche Bewegungsverhalten auszuführen, die jeweils aus einer Mehrzahl von Freiheitsgraden bestehen, in Reaktion auf eine dynamische Umgebung, wobei das Verfahren folgende Schritte umfasst:
- Definieren, als Aufgabe, das Greifen eines bewegbaren Ziels als ein Verhalten für eine Auswahleinheit,
- die Auswahleinheit wenigstens 2 Verhaltensbefehle für jede Hand erzeugt, die jeweils eingerichtet sind, um das definierte Ziel zu erreichen, sodass das Ziel erreicht wird,
- für jeden alternativen Befehl, intern die entsprechende resultierende Bewegung des mechanischen Systems durch eine Computereinheit zu simulieren, die integraler Teil des mechanischen Systems ist,
- Beurteilen der Fitness von jeder der simulierten, resultierenden Bewegungen im Hinblick auf wenigstens ein Ziel und verwendend eine Kostenfunktion, wobei ein gewichteter Abstand kleinster Quadrate der Gelenke der Arme von ihrer Mittelposition eine Unbehaglichkeitsstrafe definieren, die als ein Kriterium in die Fitnessfunktion eingearbeitet ist, und
- Senden des Befehls mit dem höchsten Fitnesswert, der zu der simulierten Bewegung führt, an die physikalischen Aktuatoren des mechanischen Systems, wobei die interne Simulation iterativ während des Versuchs, das definierte Ziel zu erreichen, fortfährt die beste Verhaltensalternative in Hinblick auf den momentanen Status der Ausführung der Aufgabe zu berechnen.

2. Verfahren gemäß Anspruch 1,
wobei das mechanische System ein autonomer Roboter ist.

3. Verfahren gemäß irgendeinem der vorangegangenen Ansprüche,
wobei das Ziel durch ein visuelles System des mechanischen Systems erzeugt wird.

4. Verfahren gemäß irgendeinem der vorangegangenen Ansprüche,
wobei die Simulation unter Verwendung eines Ansatzes der inversen Dynamik oder inversen Kinematik ausgeführt wird.

5. Verfahren gemäß irgendeinem der vorangegangenen Ansprüche,
wobei die Verarbeitungsgeschwindigkeit der internen Simulation höher gesetzt wird als die mechanische Reaktionszeit des zugrundeliegenden mechanischen Systems.

6. Verfahren gemäß irgendeinem der vorangegangenen Ansprüche,
wobei die Verarbeitungsschritte in iterativer Weise ausgeführt werden.

7. Verfahren gemäß irgendeinem der vorangegangenen Ansprüche,
wobei die Simulation eine Erfassung einer Selbstkollision, eine Selbstkollisions-Vermeidung und/oder die Vermeidung von externen Objekten umfasst.

8. Verfahren gemäß irgendeinem der vorangegangenen Ansprüche,
wobei die Simulation eine kinematische Simulation der Bewegung oder eine dynamische Simulation ist, die die Bewegung und die Kraftwechselwirkung des Systems berücksichtigt.

9. Steuerung, die konstruiert ist, um ein Verfahren gemäß irgendeinem der vorangegangenen Ansprüche umzusetzen.

10. Roboter, der eine Steuerung gemäß Anspruch 9 hat.

11. Computersoftwareprodukt, das ein Verfahren gemäß irgendeinem der vorangegangenen Ansprüche umsetzt, wenn es auf einem Rechengerät ausgeführt wird.

## Revendications

1. Procédé de contrôle des réactions d'un robot ayant une main gauche et une main droite, capable d'adopter différents comportements de mouvement, qui sont respectivement composés d'une pluralité de degrés de liberté, en réponse à un environnement dynamique, le procédé comprenant les étapes suivantes :
- la définition, en guise de tâche, d'une saisie d'une cible mobile pour un comportement vis-à-vis d'une unité de sélection,
- la génération, par l'unité de sélection, d'au moins deux commandes de comportement pour chaque main, respectivement adaptées pour atteindre la cible définie, de sorte que la cible soit atteinte,
- pour chaque commande alternative, la simulation interne du/des mouvement(s) résultant(s) correspondant(s) du système mécanique par une unité informatique qui fait partie intégrante du système mécanique,
- l'évaluation de l'adéquation de chacun des mouvements résultants simulés par rapport à au moins un objectif, et l'utilisation d'un fonction de coût, dans lequel une distance des moindres carrés pondérés entre les jonctions des bras, depuis leur position centrale, définit une pénalité d'inconfort qui est intégrée come un critère à la fonction d'adéquation, et
- l'envoi de la commande qui provoque le mouvement simulé qui présente la valeur d'adéquation la plus élevée à des actionneurs physiques du système mécanique, dans lequel
en essayant d'atteindre la cible définie, la simulation interne se poursuit de manière répétée afin de calculer la meilleure alternative de comportement compte tenu du statut actuel d'exécution de la tâche.

2. Procédé selon la revendication 1,
dans lequel le système mécanique est un robot autonome.

3. Procédé selon l'une quelconque des revendications précédentes,
dans lequel la cible est générée par un système visuel du système mécanique.

4. Procédé selon l'une quelconque des revendications précédentes,
dans lequel la simulation est effectuée à l'aide d'une approche à dynamique inverse ou à cinématique inverse.

5. Procédé selon l'une quelconque des revendications précédentes,
dans lequel la vitesse de traitement de la simulation interne est définie comme étant supérieure au temps de réponse mécanique du système mécanique sous-jacent.

6. Procédé selon l'une quelconque des revendications précédentes,
dans lequel les étapes de traitement sont exécutées de manière répétée.

7. Procédé selon l'une quelconque des revendications précédentes,
dans lequel la simulation comprend une détection d'auto-collision, un évitement d'auto-collision, et/ou l'évitement d'objets externes.

8. Procédé selon l'une quelconque des revendications précédentes,
dans lequel la simulation est une simulation cinématique du mouvement ou une simulation dynamique qui tient compte du mouvement et de l'interaction des forces du système.

9. Contrôleur conçu pour exécuter un procédé selon l'une quelconque des revendications précédentes.

10. Robot ayant un contrôleur selon la revendication 9.

11. Produit de logiciel informatique,
qui exécute un procédé selon l'une quelconque des revendications précédentes lorsqu'il est exécuté sur un dispositif informatique.
